Europäisches Patentamt

European Patent Office

Office européen des brevets

(19)

(11) Veröffentlichungsnummer: **0 065 032**
**B1**

(12) **EUROPÄISCHE PATENTSCHRIFT**

(45) Veröffentlichungstag der Patentschrift:
**10.04.85**

(21) Anmeldenummer: **81104191.2**

(22) Anmeldetag: **20.05.81**

(51) Int. Cl.⁴: **B 21 K 27/06**, B 23 D 33/00

(54) **Einrichtung an einer Umformpresse zum volumetrisch massgenauen Zerteilen von gewalztem Draht, Stangen o.dgl.**

(43) Veröffentlichungstag der Anmeldung:
**24.11.82 Patentblatt 82/47**

(45) Bekanntmachung des Hinweises auf die Patenterteilung:
**10.04.85 Patentblatt 85/15**

(84) Benannte Vertragsstaaten:
**AT BE CH FR GB IT LI NL**

(56) Entgegenhaltungen:
**DE - A - 2 005 581
DE - A - 2 700 461
DE - A - 2 911 364
DE - B - 1 055 324
DE - B - 1 214 071
FR - A - 1 442 016
US - A - 3 149 519
US - A - 3 972 211**

(73) Patentinhaber: **L. SCHULER GmbH,
Bahnhofstrasse 41 - 67 Postfach 1222,
D-7320 Göppingen (DE)**

(72) Erfinder: **Flamme, Walter, Tannenweg 17,
D-5144 Wegberg-Beeckerheide (DE)**

.ACTORUM AG

**Beschreibung**

Die Erfindung bezieht sich auf eine Einrichtung zum volumetrisch massgenauen Zerteilen von gewalztem Draht, Stangen oder dergleichen, mit einer Scherstation zum Abschneiden der Teilstücke und einem Längenanschlag mit motorischem Verstellantrieb, der mit einer Messeinrichtung zur Erfassung für das Volumen der Teilstücke massgebender Parameter unter Bildung eines Regelkreises verbunden ist, wobei die Messeinrichtung aus einer Dickenmesseinrichtung und einer Wegmesseinrichtung besteht und, in Einzugsrichtung gesehen, vor der Scherstation angeordnet ist.

Eine bekannte Einrichtung dieser Art (DE-A-2 005 581) arbeitet folgendermassen. Durch gleichzeitige Querschnittsmessung und Wegmessung wird die dem vorgegebenen Volumen des abzutrennenden Stückes des Materials entsprechende Länge des Stückes ermittelt. Nach der so ermittelten Länge wird die richtige Stellung des Anschlags durch Verdrehen der Steuerscheibe eingestellt. Danach wird das Material durch das Vorschubwerk bis zu dem Anschlag vorgeschoben und dann das abzutrennende Stück durch die Stückelungsvorrichtung abgetrennt. Diese Arbeitsweise ermöglicht zwar die Erzielung einer sehr hohen Genauigkeit in bezug auf die Volumenkonstanz der abzutrennenden Stücke. Jedoch dient die Wegmesseinrichtung nicht der Überbrückung eines Abstands zwischen der Einrichtung zur Querschnittsmessung und der Stückelungsvorrichtung. Vielmehr dient die der Querschnittsmesseinrichtung unmittelbar benachbarte Wegmesseinrichtung hierbei allein dazu, eine hochgenaue Volumenkonstanz zu erreichen. Das von der kombinierten Querschnitts- und Wegmesseinrichtung ausgemessene Stück des Materials wird dabei unmittelbar und direkt der Stückelungsvorrichtung zugeführt. Bei dieser bekannten Einrichtung (DE-A-2 005 581) liegt nicht die sich bei Verwendung einer solchen Einrichtung an einer Umformpresse stellende Aufgabe vor, die Dickenmesseinrichtung mit Abstand vor der Scherstation anzuordnen und gleichwohl die mittels der Dickenmesseinrichtung gewonnenen Werte richtig zur Verstellung des Längsanschlags zu verwenden. Zur Lösung dieser Aufgabe wäre aber die Wegmesseinrichtung der bekannten Einrichtung (DE-A-2 005 581) auch nicht geeignet, da sie keine Messsignale liefert, die signifikant für den Zeitpunkt sind, zu dem das ausgemessene Stück des Materials in die Stückelungsvorrichtung gelangt.

Die Herstellung von masshaltigen, formgleichen Pressteilen auf automatischen Umformpressen ist insofern problematisch, als die Genauigkeit des Pressteils von der Genauigkeit des in der Scherstation abgeschnittenen Drahtstückes abhängt. Die Genauigkeit ist wiederum eine Funktion der Abmessungstoleranzen und der Temperaturschwankungen des Ausgangsmaterials, beispielsweise Draht, Stangen oder dergleichen.

Werden die Drahtstücke nicht volumenkonstant in der Scherstation abgeschnitten, können erhebliche Schwierigkeiten entstehen. So besteht z.B. bei zu voluminösen Drahtstücken die Gefahr einer Maschinenüberlastung, insbesondere wenn gratfrei in geschlossenem Gesenk gepresst wird. Dies ist besonders dann gefährlich, wenn das zu pressende Teil eine Presskraft erfordert, die sich schon an der oberen Grenze der Maschinenbelastbarkeit bewegt. Hierdurch ergibt sich eine verringerte Werkzeugstandzeit und sogar die Gefahr des Werkzeugbruchs.

Des weiteren kann es sowohl bei zu grossen als auch bei zu kleinen Abschnitten zu erheblichen Schwierigkeiten innerhalb des automatischen Transports der Pressteile zwischen den Pressstufen kommen. Ähnliche Schwierigkeiten sind dann auch bei der Weiterverarbeitung der Teile z.B. in Dreh-, Fräs- oder Schleifautomaten zu erwarten. Ausserdem wird durch mangelhafte Volumenkonstanz die Ausschussquote erhöht, so dass genauere, mit grösserem Aufwand verbundene Kontrollen notwendig sind, die die Kosten in die Höhe treiben können.

Die Abmessungstoleranzen des Ausgangsmaterials sind bei Draht- oder Stangenmaterial, das gewalzt ist, besonders gross. Dieses Material wird aber gerne eingesetzt, da es im Vergleich zum gezogenen Material wesentlich billiger ist.

Um eine Einrichtung der eingangs genannten Art an einer Umformpresse, in die die Scherstation integriert ist, anwenden zu können, muss aus räumlichkonstruktiven Gründen die Messeinrichtung mit Abstand vor der Scherstation angeordnet werden können. Hieraus ergibt sich die spezielle Aufgabe, einen von der Dickenmesseinrichtung abgeleiteten Steuerwert für die Verstellung des Längsanschlags so verzögert zu verarbeiten, dass dieser Steuerwert unter Berücksichtigung des Abstands der Dickenmesseinrichtung von der Scherstation und der Länge der einzelnen Teilstücke zum richtigen Zeitpunkt eingesteuert wird.

Die Aufgabe ist bei einer Einrichtung der eingangs genannten Art dadurch gelöst, dass die Dickenmesseinrichtung mit Abstand vor der einen Bestandteil einer Umformpresse bildenden Scherstation angeordnet ist, und dass die Wegmesseinrichtung als zusätzliche Messstelle in der Form einer die Anzahl der Einzüge in die Scherstation erfassenden Zähleinrichtung ausgebildet ist, deren von einem Rechner erfasstes Messsignal signifikant für den Zeitpunkt ist, an dem das von der Dickenmesseinrichtung erfasste Teilstück vor dem Einzug in die Scherstation steht, wobei der Rechner dann die sich auf dieses Teilstück beziehende Verstellung des Längenanschlags steuert.

Durch die Anordnung einer derartigen zusätzlichen Messstelle ist man hinsichtlich der Anordnung der Dickenmesseinrichtung relativ frei, so dass sie auch als Zusatzeinrichtung zu einer schon vorhandenen Umformpresse angebaut werden kann. Eine Unterbringung der Dickenmesseinrichtung in der Nähe der Scherstation ist also nicht erforderlich. Aus dem Zusammenhang des Abstands der Dickenmesseinrichtung von der Scherstation und der mittleren Einzuglänge lässt sich somit ermitteln, wann das gemessene Teilstück vor dem Einzug in die Scherstation steht.

Die Erfindung sieht ferner vor, dass der Längenanschlag mit einem Grob- und einem Feinverstellantrieb versehen ist, wobei letzterer mit der Dickenmesseinrichtung verbunden ist. Mit dem Grobverstellantrieb wird der Längenanschlag somit zunächst in eine mittlere Position gebracht, während der Feinverstellantrieb die Veränderung der Stellung des Längenanschlags in Abhängigkeit von dem Messergebnis vornimmt. Dies kann so ausgeführt werden, dass Längenanschlag und Grobverstellantrieb auf einem Schlitten oder dergleichen angeordnet werden, der mittels des Feinverstellantriebs verschiebbar ist. Der Feinverstellantrieb besteht dann zweckmässigerweise aus einem quer zur Verstelleinrichtung motorisch bewegbaren Keil.

Für den Verstellantrieb kommen gemäss der Erfindung sowohl ein Schrittmotor als auch ein Hydraulikzylinder in Frage.

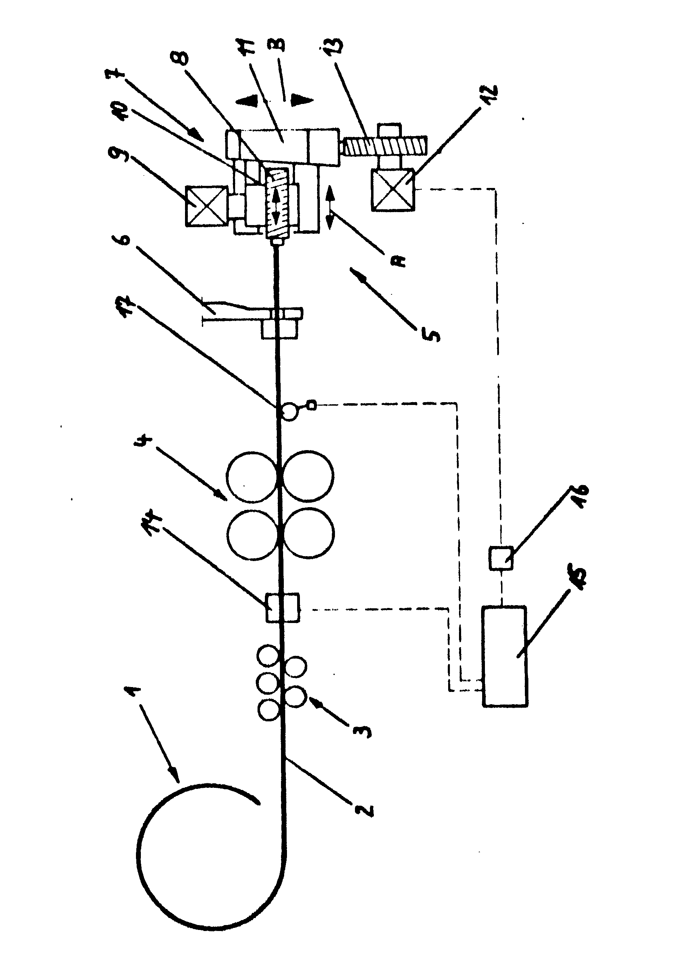

In der Zeichnung ist die Erfindung anhand eines Ausführungsbeispiels näher veranschaulicht. Sie zeigt in einer schematisch gehaltenen Ansicht eine Anlage zum Umformen von aus einem Draht abgeschnittenen Teilstücken in Pressteile. Diese Anlage besteht im wesentlichen aus einer hier nicht näher dargestellten Haspel 1, von der der Draht 2 abgewickelt wird, einem Richtapparat 3, in dem der Draht 2 geradegerichtet wird, einem Einzugapparat 4, mit dem der Draht 2 transportiert wird, sowie einer Mehrstufenpresse, von der hier nur die Scherstation 5 dargestellt ist.

Die Scherstation 5 weist ein Schermesser 6 zum Abscheren des eingezogenen Drahtes 2 sowie einen Längenanschlag 7 auf, der die Einzuglänge des Drahtes 2 begrenzt. Der Längenanschlag 7 hat einen Anschlagbolzen 8, der mittels eines Grobverstellantriebs 9 in die Richtungen des Doppelpfeiles A hin- und herbewegbar ist. Anschlagbolzen 8 und Grobverstellantrieb 9 sitzen auf einem Schlitten 10, der als Ganzes über einen Verstellkeil 11 ebenfalls in die Richtungen des Doppelpfeiles A bewegbar ist. Hierzu ist der Verstellkeil 11 mit einem als Schrittmotor ausgebildeten Feinverstellantrieb 12 über ein Getriebe 13 derart gekoppelt, dass er in die Richtungen des Doppelpfeils B, also quer zur Verstellrichtung des Anschlagbolzens 8, verschoben werden kann.

Zwischen Richtapparat 3 und Einzugapparat 4 ist eine Dickenmesseinrichtung 14 angeordnet, die die jeweilige Dicke des Drahtes 2 oder dessen Abweichung von einem vorgegebenen Mass erfasst und an einen Rechner 15 weitergibt. Dieser wiederum leitet die Informationen weiter an einen Translator 16, der sie in Steuerbefehle für den Feinverstellantrieb 12 umsetzt.

Dieser Feinverstellantrieb 12 wird dann in Gang gesetzt, wenn die Dickenmesseinrichtung 14 Abweichungen in der Dicke des Drahtes 2 feststellt. Bei Abweichungen nach unten wird dann der Anschlagbolzen 8 nach hinten verstellt, so dass eine grössere Länge des Drahtes 2 eingezogen wird, während bei Abweichungen nach oben entsprechend umgekehrt verfahren wird. Die Verstellung des Anschlagbolzens 8 erfolgt dabei so, dass die abgeschnittenen Teilstücke immer das gleiche Volumen aufweisen.

Bei der Anordnung der Dickenmesseinrichtung 14 derart weit von der Scherstation 5 ergibt sich das Problem, die Verstellung des Anschlagbolzens 8 erst dann ablaufen zu lassen, wenn das gemessene Teilstück des Drahtes 2 vor dem Einzug in die Scherstation 5 steht. Um diesen Zustand zu erkennen, ist zwischen Einzugapparat 4 und Scherstation 5 eine Zähleinrichtung 17 vorgesehen, die die Zahl der Einzüge in die Scherstation 5 erfasst und an den Rechner 15 weitergibt. Anhand der durchschnittlichen, mit dem Grobverstellantrieb 9 eingestellten Einzuglänge, der Zahl der Einzüge und des Abstands zwischen Dickenmesseinrichtung 14 und Scherstation 5 kann der Rechner 15 dann ermitteln, wann das gemessene Teilstück vor der Scherstation 5 angelangt ist, um dann die sich auf dieses Teilstück beziehende Korrektur der Stellung des Längenanschlags 8 vorzunehmen.

Ist das Teilstück dann eingezogen, so wird es vom Schermesser 6 abgetrennt und durch hier nicht mehr dargestellte Transporteinrichtungen zu den einzelnen Stufen der Mehrstufenpresse transportiert.

## Patentansprüche

1. Einrichtung zum volumentrisch massgenauen Zerteilen von gewalztem Draht (2), Stangen oder dergleichen, mit einer Scherstation (5) zum Abschneiden der Teilstücke und einem Längenanschlag (7) mit motorischem Verstellantrieb (12), der mit einer Messeinrichtung zur Erfassung für das Volumen der Teilstücke massgebender Parameter unter Bildung eines Regelkreises (15,16) verbunden ist, wobei die Messeinrichtung aus einer Dickenmesseinrichtung (14) und einer Wegmesseinrichtung besteht und, in Einzugsrichtung gesehen, vor der Scherstation (5) angeordnet ist, dadurch gekennzeichnet, dass die Dickenmesseinrichtung (14) mit Abstand vor der einen Bestandteil einer Umformpresse bildenden Scherstation (5) angeordnet ist, und dass die Wegmesseinrichtung als zusätzliche Messstelle in der Form einer die Anzahl der Einzüge in die Scherstation (5) erfassenden Zähleinrichtung (17) ausgebildet ist, deren von einem Rechner (15) erfasstes Messsignal signifikant für den Zeitpunkt ist, an dem das von der Dickenmesseinrichtung (14) erfasste Teilstück vor dem Einzug in die Scherstation (5) steht, wobei der Rechner (15) dann die sich auf dieses Teilstück beziehende Verstellung des Längenanschlags (7) steuert.

2. Einrichtung nach Anspruch 1, dadurch gekennzeichnet, dass der Längenanschlag (7) mit einem Grobverstellantrieb (9) und einem Feinverstellantrieb (12) versehen ist, wobei letzterer mit der Dickenmesseinrichtung (14) verbunden ist.

3. Einrichtung nach Anspruch 2, dadurch gekennzeichnet, dass Längenanschlag (7) und Grobverstellantrieb (9) auf einem Schlitten (10) angeordnet sind, der mittels des Feinverstellantriebs (12) verschiebbar ist.

4. Einrichtung nach Anspruch 2 oder 3, dadurch gekennzeichnet, dass der Feinverstellantrieb (12) aus einem quer zur Verstellrichtung (Pfeil A) motorisch bewegbaren Keil (11) besteht.

5. Einrichtung nach einem der Ansprüche 1 bis 4, dadurch gekennzeichnet, dass der Verstellantrieb (12) einen Schrittmotor aufweist.

6. Einrichtung nach einem der Ansprüche 1 bis 4, dadurch gekennzeichnet, dass der Verstellantrieb (12) einen Hydraulikzylinder aufweist.

## Claims

1. Device for the volumetrically dimensionally accurate cutting into parts of rolled wire (2), rods or similar, comprising a cropping station (5) for cutting off the part pieces and a length feed stop (7) including a motor-driven adjusting drive (12) which is connected, forming a control loop (15, 16), to a measuring device for detecting parameters which are determining for the volume of the part pieces, the measuring device consisting of a thickness measuring device (14) and a path measuring device and being arranged in front of the cropping station (5), seen in the drawing-in direction, characterised in that the thickness measuring device (14) is arranged at a distance in front of the cropping station (5) which forms a component of a forming press, and that the path measuring device is constructed as an additional measuring station in the form of a counting device (17) which detects the number of intakes into the cropping station (5) and the measurement signal of which, aquired by a computer (15), signifies the time at which the part piece detected by the thickness measuring device (14) is present in front of the intake into the cropping station (5), the computer (15) at which time controls the length feed stop (7) adjustment relating to this part piece.

2. Device according to Claim 1, characterised in that the length feed stop (7) is provided with a coarse adjustment drive (9) and a fine adjustment drive (12), the latter being connected to the thickness measuring device (14).

3. Device according to Claim 2, characterised in that length feed stop (7) and coarse adjustment (9) are arranged on a slide (10) which is displaceable by means of the fine adjustment drive (12).

4. Device according to Claim 2 or 3, characterised in that the fine adjustment drive (12) consists of a wedge (11) which can be moved transversely to the direction of adjustment (arrow A) by motor power.

5. Device according to one of Claims 1 to 4, characterised in that the adjustment drive (12) is provided with a stepping motor.

6. Device according to one of Claims 1 to 4, characterised in that the adjustment drive (12) is provided with a hydraulic cylinder.

## Revendications

1. Dispositif pour diviser volumétriquement avec précision un fil laminé (2), des barres ou autres semblables, comportant une station de cisaillage (5) pour couper les pièces et une butée longitudinale (7) avec dispositif de réglage motorisé (12) reliée à un dispositif de mesure pour saisir les paramètres déterminants pour le volume de pièce en formant un circuit de régulation (15, 16), étant précisé que le dispositif de mesure est constitué d'un dispositif de mesure d'épaisseur (14) et d'un dispositif de mesure de déplacement et qu'il est disposé avant la station de cisaillage (5), vu dans le sens de l'avancement, caractérisé en ce que le dispositif de mesure d'épaisseur (14) est disposé à une certaine distance de la station de cisaillage (5) qui fait partie intégrante d'une presse de formage; et que le dispositif de mesure de déplacement est conçu comme poste de mesure complémentaire sous la forme d'un dispositif de comptage (17) qui saisit le nombre des avances dans la station de cisaillage (5) et dont le signal de mesure, saisi par un calculateur (15) est significatif de l'instant auquel la pièce saisie par le dispositif de mesure d'épaisseur (14) se trouve sur le point d'avancer dans la station de cisaillage (5), étant précisé que le calculateur (15) commande alors le réglage, relatif à cette pièce, de la butée longitudinale (7).

2. Dispositif selon la revendication 1, caractérisé en ce que la dite longitudinale (7) est munie d'un mécanisme de réglage grossier (9) et d'un mécanisme de réglage fin (12), ce dernier étant relié au dispositif de mesure d'épaisseur (14).

3. Dispositif selon la revendication 2, caractérisé en ce que la butée longitudinale (7) et le mécanisme de réglage grossier (9) sont disposés sur un chariot (10) que le mécanisme de réglage fin (12) peut faire coulisser.

4. Dispositif selon la revendication 2 ou la revendication 3, caractérisé en ce que le mécanisme de réglage fin (12) est constitué d'un coin (11) qu'un moteur peut déplacer transversalement à la direction de reglage (flèche A).

5. Dispositif selon l'une des revendications 1 à 4, caractérisé en ce que le mécanisme de réglage (12) présente un moteur pas à pas.

6. Dispositif selon l'une des revendications 1 à 4, caractérisé en ce que le mécanisme de réglage (12) présente un verin hydraulique.

0 065 032

5